(19) Europäisches Patentamt
European Patent Office
Office européen des brevets

(11) **EP 2 984 435 B1**

(12) **FASCICULE DE BREVET EUROPEEN**

(45) Date de publication et mention de la délivrance du brevet:
**27.09.2017 Bulletin 2017/39**

(21) Numéro de dépôt: **14718938.5**

(22) Date de dépôt: **07.04.2014**

(51) Int Cl.:
**F28D 20/00** *(2006.01)*

(86) Numéro de dépôt international:
**PCT/EP2014/056950**

(87) Numéro de publication internationale:
**WO 2014/166878 (16.10.2014 Gazette 2014/42)**

(54) **SYSTEME DE STOCKAGE THERMIQUE PAR VOIE THERMOCHIMIQUE**

THERMOCHEMISCHES WÄRMESPEICHERSYSTEM

THERMOCHEMICAL HEAT STORAGE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2013 FR 1353189**

(43) Date de publication de la demande:
**17.02.2016 Bulletin 2016/07**

(73) Titulaire: **Commissariat à l'Énergie Atomique et aux Énergies Alternatives
75015 Paris (FR)**

(72) Inventeurs:
• **MINVIELLE, Zoé
  F-38000 Grenoble (FR)**
• **PARDO, Pierre
  46000 Cahors (FR)**
• **ROUGE, Sylvie
  F-38320 Brie et Angonnes (FR)**
• **THONON, Bernard
  F-38700 Le Sappey en Chartreuse (FR)**

(74) Mandataire: **Brevalex
  95, rue d'Amsterdam
  75378 Paris Cedex 8 (FR)**

(56) Documents cités:
WO-A2-2011/054676      FR-A- 1 345 666
US-A- 2 674 612         US-A- 3 672 069
US-A- 3 973 552

**Description**

## DOMAINE TECHNIQUE ET ART ANTÉRIEUR

La présente invention se rapporte à un système de stockage thermique voie thermochimique, en particulier pour une centrale solaire.

De nombreux domaines et de nombreuses applications industrielles mettent en oeuvre le stockage de chaleur. Le stockage de la chaleur permet la valorisation de la chaleur issue de processus industriels, la récupération d'énergie excédentaire ou le découplage entre le moment de production de l'énergie thermique et son utilisation.

A titre d'exemple, dans le domaine du solaire thermique à concentration (CSP pour "Concentrated Solar Power" en terminologie anglo-saxonne), l'excédent de chaleur produit aux heures à fort ensoleillement peut ainsi être stocké pour être exploité en fin de journée.

Le stockage de la chaleur peut être typiquement réalisé soit sous forme d'énergie sensible (en faisant varier le niveau de température d'un matériau de stockage solide ou liquide), sous forme d'énergie latente (en faisant changer de phase un matériau de stockage) ou enfin sous forme d'énergie chimique (en utilisant des réactions chimiques endothermiques et exothermiques).

Le stockage de chaleur faisant intervenir des réactions chimiques endothermiques et exothermiques est désigné "stockage thermochimique".

Les applications du stockage de l'énergie thermique par voie thermochimique sont par exemple les stockages haute température, par exemple entre 400°C et 550°C, longue durée et haute densité, par exemple de l'ordre de 500 kWh/m$^3$.

Une des réactions réversibles envisagée permettant un tel stockage est la réaction d'hydratation/déshydratation du couple CaO/Ca(OH)$_2$, sous forme solide, selon l'équation de réaction suivante :

$$Ca(OH)_2 + \Delta H_r \leftrightarrow HCaO + H_2O,$$

$\Delta H_r$ étant l'enthalpie de la réaction.

Lors de la phase de charge, l'énergie thermique issue, par exemple d'un champ solaire via un fluide caloporteur, permet de déshydrater l'hydroxyde de calcium pour former de l'oxyde de calcium et de l'eau. Ces produits sont stockés pendant une durée indéterminée éventuellement à température ambiante. Ensuite, pour restituer l'énergie thermique emmagasinée, CaO et H$_2$O sont mélangés et réagissent pour libérer la chaleur de réaction et régénérer l'hydroxyde de calcium. Cette énergie thermique est par exemple transmise à une turbine pour produire de l'électricité.

Les avantages liés au stockage de l'énergie thermique par voie thermochimique sont les suivants :

- il n'y a pas de pertes thermiques durant la phase de stockage des produits, ce qui permet d'envisager un stockage de durée illimitée ;
- le stockage offre une forte densité énergétique en raison des enthalpies de réaction importantes ;
- ce stockage offre la possibilité de stocker la chaleur et de la restituer en des lieux géographiques différents. Le transport des produits de stockage est possible en raison de la densité énergétique intéressante et de l'absence de pertes thermiques ;
- il est possible de restituer la chaleur à un même niveau de température que celle de sortie du champ solaire, ce qui permet par exemple à la turbine de fonctionner à son régime nominal.
- il est possible de conserver la quantité d'énergie stockée pour une température donnée.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Le maintien de ces deux niveaux de température le plus constants possibles est recherché afin d'obtenir un fonctionnement optimisé du cycle. En effet, à titre d'exemple, les turbines à vapeur qui assurent la conversion de l'énergie thermique en énergie électrique ont un rendement plus élevé lorsque la température d'entrée dans la turbine est maintenue constante à une valeur prédéfinie.

Par conséquent, le stockage associé à de tels systèmes doit donc respecter au mieux ces caractéristiques et permettre par exemple de déstocker de la chaleur à un niveau de température constant.

En outre, il est préférable d'alimenter le champ solaire avec un caloporteur dont la température est sensiblement constante. Par conséquent, en phase de déstockage, le système doit permettre de déstocker de la chaleur à un niveau de température constant ou sensiblement constant.

Or, dans le cas d'un champ solaire, la puissance délivrée par celui-ci varie au cours de la journée, notamment du fait des variations des conditions d'ensoleillement.

Par conséquent, on cherche à réaliser un système de stockage permettant de délivrer un caloporteur à un niveau de température constant ou sensiblement constant indépendamment de la puissance thermique en entrée du système de stockage.

Le document *High temperature thermochemical heat storage for concentrated solar power using gas-solid reactions,* F. Schaube et al., J. Solar Energy Eng., 133 (3), 2011*; Studies on applicability of scallop material to calcium oxide/calcium hydroxide chemical heat pump,* H. Ogura, S. Abliz, H. Kage, Fuel Proc. Tech. 85 (8-10), 2004) décrit un procédé de stockage thermochimique mettant en oeuvre la réaction réversible d'hydratation/déshydratation du $CaO/Ca(OH)_2$. Ce procédé met en oeuvre un réacteur à lit fixe de particules de réactif ($CaO$ ou $Ca(OH)_2$). Les documents WO 2011/054676 A2 et US 3 973 552 A décrivent des systèmes et des procédés de stockage thermique par voie thermochimique utilisant des lits fluidisés. Le document US3955554 décrit un procédé de stockage longue durée pour l'habitat mettant en oeuvre le couple réactionnel $CaO/Ca(OH)_2$. L'oxyde de calcium, $CaO$, est stocké dans un premier compartiment. Une vis sans fin transporte le $CaO$ vers un second compartiment rempli d'eau. La réaction d'hydratation se produit et libère de la chaleur. L'eau est donc réchauffée et la chaleur est transmise à un système d'ECS d'un bâtiment via un échangeur de chaleur immergé dans le compartiment d'eau. Les particules d'hydroxyde de calcium qui se sont déposées au fond du compartiment d'eau sont transportées également par une vis sans fin jusqu'à une « chambre solaire » dans laquelle se produit la réaction de déshydratation. Les particules de $CaO$ ainsi régénérées sont transportées dans leur compartiment de stockage initial, de nouveau par une vis sans fin.

Aucun de ces dispositifs ne permet de délivrer un caloporteur à un niveau de température constant ou sensiblement constant indépendamment de la puissance en entrée du système.

## EXPOSÉ DE L'INVENTION

C'est par conséquent un but de la présente invention d'offrir un système de stockage thermochimique permettant de délivrer un fluide caloporteur à température constante ou sensiblement constante, malgré une variation de la puissance thermique potentielle en entrée du système de stockage.

Le but énoncé ci-dessus est atteint par un système permettant le stockage et le déstockage de chaleur par voie thermochimique mettant en oeuvre au moins un compartiment destiné à contenir un matériau de stockage de chaleur par voie thermochimique, des moyens d'écoulement d'un gaz de fluidisation à travers le compartiment de sorte à réaliser un lit fluidisé avec le matériau de stockage, des moyens d'échange thermique permettant la circulation d'un fluide caloporteur dans le compartiment, et des moyens de régulation de la vitesse d'entrée du gaz de fluidisation en fonction de la puissance thermique en entrée du système transportée par le caloporteur de sorte à réguler la quantité de matériau de stockage dans le compartiment en fonction de la chaleur à stocker ou à déstocker.

En d'autres termes, l'invention adapte la quantité de solide présente dans le lit à la quantité de chaleur à stocker ou à fournir par modification d'une vitesse d'entrée du gaz de fluidisation, et maîtrise ainsi la température de sortie du caloporteur.

Lorsque le débit de caloporteur en entrée du système de stockage est variable, ce qui est par exemple le cas dans les champs solaires où le débit varie au cours de la journée de sorte à conserver un caloporteur à température sensiblement constante, la vitesse d'entrée du gaz de fluidisation est régulée en fonction du débit de caloporteur en entrée du système.

Dans le cas où la température d'entrée varie, la vitesse d'entrée du gaz de fluidisation est régulée en fonction de la température.

La régulation de la vitesse d'entrée du gaz de fluidisation peut également être effectuée à la fois en fonction de la température du caloporteur en entrée et du débit de caloporteur en entrée.

Dans le cas particulier d'un système de stockage pour un champ solaire, le système de stockage selon l'invention permet de fixer un gradient de température aux bornes du champ solaire et du système de conversion associé au champ solaire, par exemple une turbine.

De manière particulièrement avantageuse, le dispositif comporte plusieurs compartiments formant plusieurs lits fluidisés communiquant par débordement, le caloporteur circulant dans un compartiment, puis dans l'autre compartiment. Chaque lit a une température, ce qui permet de se rapprocher d'un écoulement de type piston, améliorant l'efficacité globale des échanges de chaleur.

De manière avantageuse, le ou les compartiments est/sont divisé(s) en sous-compartiments communiquant les uns avec les autres de sorte à imposer un écoulement quasi piston au matériau de stockage, ce qui améliore encore l'efficacité globale des échanges de chaleur.

Les moyens d'échange thermique peuvent soit être formés dans la paroi du compartiment, soit traverser le compartiment.

D'une manière également avantageuse, le système de stockage peut comporter des lits fluidisés alimentés en parallèle en matériau de stockage et en caloporteur de sorte à pouvoir absorber des variations plus importantes de puissance thermique tout en maintenant la température de sortie constante.

La présente invention a alors pour objet un système de stockage thermique par voie thermochimique comportant au moins un compartiment, dit compartiment amont, destiné à contenir un matériau de stockage thermique, des moyens d'alimentation du compartiment amont en matériau de stockage thermique, des moyens de circulation dans le compartiment amont d'un gaz de fluidisation de sorte à former un lit fluidisé dans ledit compartiment amont avec le matériau de stockage, des moyens de circulation d'un caloporteur dans ledit compartiment amont de sorte à assurer des échanges thermiques avec le matériau de stockage et des moyens de régulation de la vitesse d'entrée du gaz de fluidisation en fonction de la puissance thermique transportée par le fluide caloporteur en entrée du système de stockage, de sorte que la température du caloporteur en sortie du système de stockage thermique soit maintenue sensiblement constante.

De manière avantageuse, le système de stockage thermique comporte au moins un autre compartiment, dit compartiment aval, lesdits compartiments amont et aval étant agencés de sorte que le matériau contenu dans le compartiment amont puisse s'écouler vers le compartiment aval par débordement lorsque le lit fluidisé dans le compartiment amont atteint une première hauteur donnée, des moyens de circulation d'un gaz de fluidisation dans ledit compartiment aval, et des moyens de régulation de la vitesse d'entrée du gaz de fluidisation dans le compartiment aval en fonction de la puissance thermique transportée par le fluide caloporteur en entrée du système de stockage, les moyens de circulation du caloporteur traversant le compartiment amont et le compartiment aval.

De manière encore plus avantageuse, le système de stockage thermique comporte au moins compartiment supplémentaire, des moyens de circulation d'un gaz de fluidisation dans ledit compartiment supplémentaire, et des moyens de régulation de la vitesse d'entrée du gaz de fluidisation en fonction de la puissance thermique transportée par le fluide caloporteur en entrée du système de stockage, ledit compartiment supplémentaire étant agencé par rapport au compartiment amont et au compartiment aval de sorte que le matériau contenu dans le compartiment amont s'écoule dans le compartiment supplémentaire par débordement lorsque le lit fluidisé du compartiment amont atteint la première hauteur donnée, et le matériau contenu dans le compartiment supplémentaire s'écoule vers le compartiment aval par débordement lorsque le lit fluidisé dans le compartiment supplémentaire atteint une deuxième hauteur donnée, les moyens de circulation du caloporteur traversant le compartiment amont, le compartiment supplémentaire et le compartiment aval.

Le système peut comporter des moyens de circulation dans l'un ou les compartiments d'un composé gazeux, ledit composé gazeux étant destiné à réagir avec le matériau de stockage pour provoquer la libération de la chaleur et étant libéré lors du stockage de la chaleur.

De préférence, les moyens de circulation du caloporteur sont tels que le caloporteur circule du compartiment aval vers le compartiment amont.

Dans un exemple avantageux, au moins le ou au moins l'un des compartiments est divisé en au moins deux sous-compartiments en communication, de sorte que le matériau de stockage s'écoule d'un sous-compartiment à l'autre avant de s'écouler par débordement hors dudit compartiment. Les sous-compartiments peuvent être avantageusement délimités pas des cloisons formant chicanes.

Dans un exemple de réalisation, les moyens de circulation de caloporteur sont formés dans des parois du ou des compartiments. Dans un autre exemple de réalisation, les moyens de circulation de caloporteur sont formés dans les cloisons.

Le gaz de fluidisation et le composé gazeux sont de préférence mélangés avant de circuler dans le ou les compartiments.

Selon une caractéristique avantageuse, les moyens de régulation de la vitesse d'entrée du gaz de fluidisation sont communs à tous les compartiments.

La puissance thermique transportée par le caloporteur peut être déterminée par la mesure du débit de caloporteur en entrée du système de stockage thermique et/ou de la température du caloporteur en entrée.

La présente invention a également pour objet un ensemble de stockage thermique comportant au moins deux systèmes de stockage selon la présente invention, lesdits systèmes de stockage étant connectées en parallèle au moyens d'alimentation en caloporteur, ledit ensemble comportant des moyens de commande de la circulation du caloporteur dans la ou les systèmes de stockage.

La présente invention a également pour objet une installation de stockage comportant au moins un système de stockage selon la présente invention ou au moins un ensemble selon la présente invention, comportant une zone pour entreposer du matériau de stockage prêt à stocker de l'énergie thermique et une zone pour entreposer du matériau de stockage prêt à fournir de l'énergie thermique, et du matériau de stockage.

Le matériau de stockage est avantageusement mélangé avec un matériau particulaire inerte, par exemple du SiC.

Par exemple, le matériau de stockage prêt à stocker de l'énergie thermique est du $Ca(OH)_2$ et le matériau de stockage prêt à fournir de l'énergie thermique est du CaO.

La présente invention a également pour objet une centrale solaire comportant un champ solaire, un système de conversion de l'énergie thermique produite par le champ solaire en énergie électrique et au moins une installation de stockage thermique selon l'invention, le système de conversion et l'installation de stockage étant connectés en parallèle avec le champ solaire.

La présente invention a également pour objet un procédé de stockage thermique par voie thermochimique dans un matériau de stockage comportant les étapes:

a1) Remplissage d'un ou de plusieurs compartiments en matériau de stockage dans un état apte à stocker de la chaleur,

b1) Circulation d'un gaz de fluidisation dans le ou les compartiments,

c1) Circulation d'un caloporteur apte à céder de la puissance thermique dans un échangeur thermique avec le matériau de stockage dans le ou les compartiments, de sort qu'une réaction chimique avec le matériau de stockage ait lieu afin que le matériau de stockage absorbe la chaleur dans le ou les compartiments,

d1) Mesure de la puissance thermique à stocker transportée par le caloporteur,

e1) Modification de la vitesse d'entrée du gaz de fluidisation en fonction de l'écart entre ladite puissance mesurée et une puissance nominale.

La présente invention a également pour objet un procédé de déstockage thermique par voie thermochimique dans un matériau de stockage comportant les étapes:

a2) Remplissage du ou des compartiments en matériau de stockage dans un état apte à déstocker la chaleur,

b2) Circulation d'un gaz de fluidisation et d'un composé gazeux apte à assurer une réaction chimique avec le matériau de stockage afin qu'il libère de la chaleur dans le ou les compartiments,

c2) Circulation d'un caloporteur apte à capter de la puissance thermique dans un échangeur thermique avec le matériau de stockage,

d2) Mesure de la puissance thermique transportée par le caloporteur,

e2) Modification de la vitesse d'entrée du gaz de fluidisation en fonction puissance en fonction de l'écart entre ladite puissance mesurée et une puissance nominale.

Les étapes d1) et d2) peuvent se faire par mesure du débit et/ou de la température du caloporteur avant sa traversée du ou des compartiments. Les étapes a1) et a2) d'alimentation en matériau de stockage peuvent être continues.

## BRÈVE DESCRIPTION DES DESSINS

La présente invention sera mieux comprise à l'aide de la description qui va suivre et des dessins en annexes sur lesquels :

- la figure 1 est une représentation schématique d'une centrale solaire dans laquelle un système de stockage selon l'invention peut être mis en oeuvre,
- les figures 2A et 2B sont des représentations schématiques d'un exemple de réalisation d'un système de stockage thermique à trois compartiments en phase de charge et de décharge respectivement,
- la figure 2C est une vue de détail d'une représentation schématique d'un exemple avantageux d'un transfert de matériau entre deux compartiments,
- la figure 3A est une représentation schématique d'une vue de côté d'un système de charge dans lequel les compartiments sont cloisonnés,
- la figure 3B est une vue de dessus d'un exemple de réalisation d'un compartiment du système de stockage de la figure 3A,
- la figure 3C est une vue de dessus d'un autre exemple de réalisation d'un compartiment du système de stockage de la figure 3A,
- la figure 4 est une vue de dessus d'un exemple de réalisation du système de stockage thermique de la figure 3A,
- la figure 5A est une représentation graphique du profil de variation de température du matériau de stockage et du caloporteur en fonction du temps en phase de charge pour le système de la figure .3A,
- la figure 5B est une représentation graphique du profil de variation de température du matériau de stockage et du caloporteur en fonction du temps en phase de charge pour un système de stockage à un seul compartiment,
- la figure 6A est une représentation graphique du profil de variation de température du matériau de stockage et du caloporteur en fonction du temps en phase de décharge pour le système de la figure 3A,
- la figure 6B est une représentation graphique du profil de variation de température du matériau de stockage et du caloporteur en fonction du temps en phase de décharge pour un système de stockage à un seul compartiment,
- la figure 7 est une représentation schématique de deux systèmes de stockage en parallèle,
- la figure 8 est une représentation schématique de trois systèmes de stockage en parallèle.

## EXPOSÉ DÉTAILLÉ DE MODES DE RÉALISATION PARTICULIERS

Dans la description qui va suivre, il sera fait mention d'un système de stockage thermique, cette expression désigne un système permettant de stocker et déstocker de l'énergie thermique par voie thermochimique. Ce système ne stocke pas nécessairement le matériau de stockage thermique mais assure au moins le transfert de l'énergie thermique du caloporteur vers le matériau de stockage et inversement et ceci par l'intermédiaire d'une réaction chimique lors de laquelle le matériau de stockage se transforme en stockant ou en libérant de la chaleur respectivement.

Le matériau de stockage thermique désigne à la fois le matériau qui est prêt à réagir pour libérer de la chaleur et le matériau qui est prêt à réagir pour stocker de la chaleur. Par exemple, dans le cas où le couple CaO/Ca(OH)$_2$ est utilisé, le matériau de stockage désigne à la fois le CaO et le Ca(OH)$_2$.

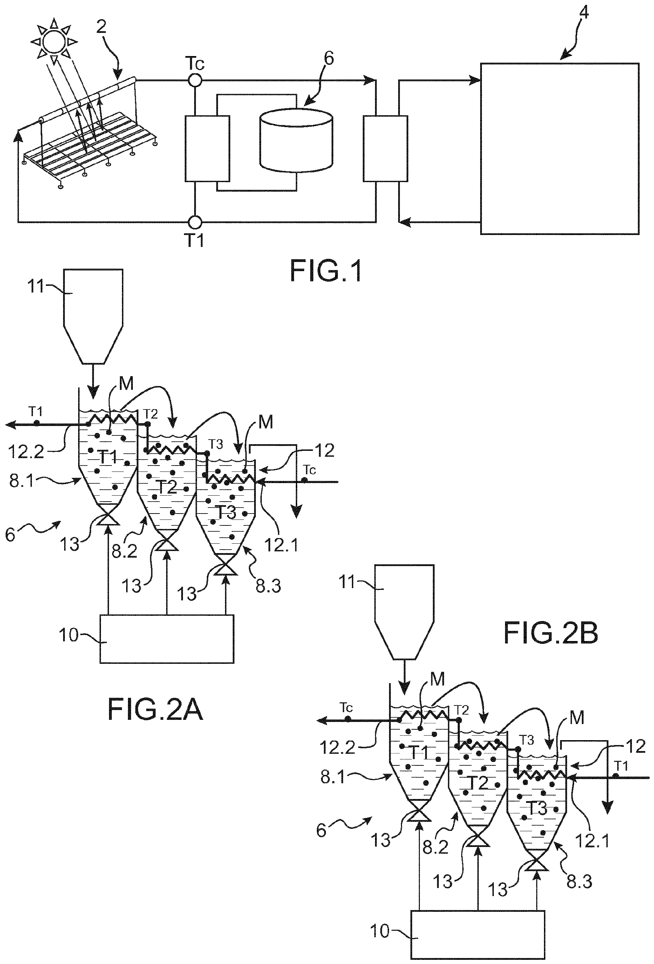

Sur la figure 1, on peut voir représentée schématiquement une centrale solaire mettant en oeuvre un système de stockage thermique selon l'invention.

La centrale solaire comporte un champ solaire 2, un système de conversion 4 de l'énergie thermique en une autre énergie, par exemple il s'agit d'une turbine produisant de l'électricité, et un système de stockage thermique 6.

La turbine 4 est connectée à la sortie et à l'entrée du champ solaire de sorte à être alimentée en caloporteur chaud par celui-ci et à renvoyer le caloporteur refroidi en entrée du champ solaire 2. Le système de stockage thermique 6 est connecté en parallèle avec la turbine 4 et le champ solaire 6. Des moyens de commutation sont prévus dans le circuit de sorte que le champ solaire 2 puisse alimenter la turbine 4 et/ou le système de stockage thermique 6 et le système de stockage thermique 6 puisse alimenter la turbine 4.

Dans la description qui va suivre, le système de stockage comporte trois compartiments. Mais un système de stockage comportant un, deux ou plus de trois compartiments ne sort pas du cadre de la présente invention.

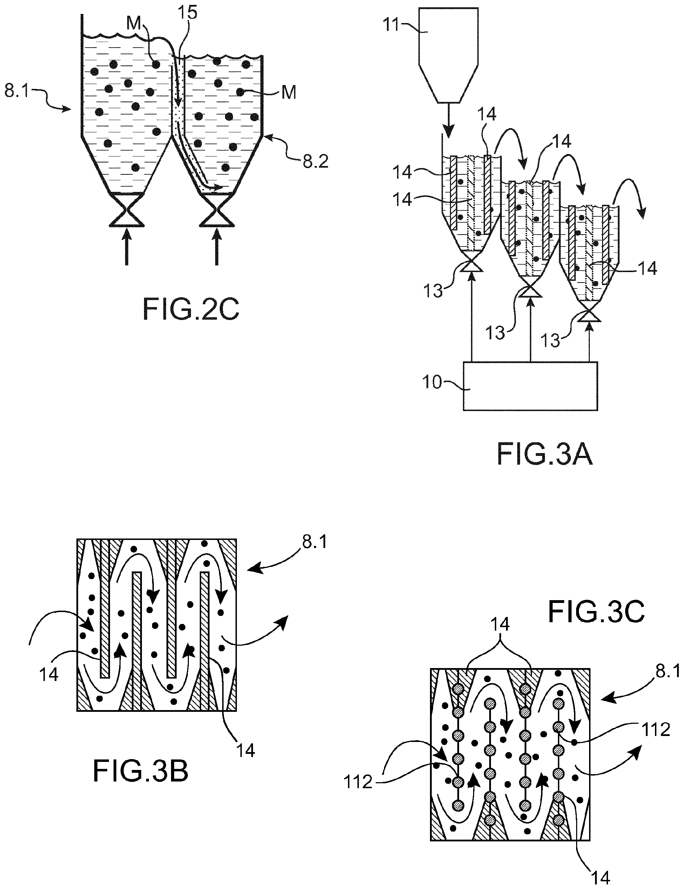

Sur la figure 2, on peut voir une représentation schématique d'un exemple de réalisation avantageux du système de stockage 6 selon l'invention.

Le système de stockage 6 comporte trois compartiments désignés 8.1, 8.2, 8.3, disposés côte à côte. Chaque compartiment est destiné à contenir un matériau de stockage désigné M. Le système de stockage comporte également des moyens 10 permettant de réaliser dans chaque compartiment un lit fluidisé. Ces moyens 10 font circuler un gaz de fluidisation à travers chaque compartiment du bas vers le haut. Pour cela, chaque compartiment 8.1, 8.2, 8.3 comporte dans son fond inférieur une entrée de gaz de fluidisation.

Il est rappelé qu'un lit fluidisé est constitué d'une phase solide granulaire, composée de particules de petite taille et d'une phase fluide en écoulement. Le lit de particules solides est traversé par un courant ascendant de fluide. Lorsque la traînée qu'exerce le fluide sur le lit devient supérieure au poids apparent des particules, le lit se fluidise.

Le matériau de stockage est par exemple le couple CaO/Ca(OH)$_2$.

Avantageusement, un agent inerte peut être placé dans le lit fluidisé pour améliorer la fluidisation des particules. Il peut être choisi de sorte à favoriser également les transferts thermiques, par exemple il peut s'agir de particules de SiC ou bien de particules d'alumine, de sable ou de verre. Les particules inertes ont par exemple un diamètre compris entre 70 μm et 200 μm.

Le gaz de fluidisation est par exemple de l'air, de l'azote ou de l'oxygène.

En phase de déstockage ou de décharge de la chaleur, le gaz de fluidisation est mélangé à de l'eau vapeur pour provoquer la transformation du CaO au Ca(OH)$_2$ en libérant de la chaleur et en phase de stockage ou de charge, le gaz de fluidisation est sec pour provoquer la déshydratation du Ca(OH)$_2$ et sa transformation en CaO.

Les réaction pouvant être mis en sont par exemple:

$$Mg(OH)_2 = MgO + H_2O$$
$$CaCO3 = CaO + CO_2$$
$$PbCO_3 = PbO + CO_2$$
$$MgH_2 = Mg + H_2$$

La réaction d'oxydoréduction

$$2Co_2O_4 = 6CoO + O_2.$$

Dans les exemples de réactions ci-dessus, afin de provoquer le réaction en phase de décharge, un composé sous forme gazeuse est introduit dans le ou les compartiments avec le gaz de fluidisation. De manière avantageuse, le composé gazeux et le gaz de fluidisation sont préalablement mélangés avant leur introduction dans le ou les compartiments. Ce composé peut être de la vapeur d'eau, de l'oxygène, de l'hydrogène suivant la réaction mise en jeu. Dans le cas de la réaction CaCO3 = CaO + CO$_2$, dans laquelle le composé gazeux est du CO$_2$, le gaz de fluidisation est du CO$_2$, le gaz de fluidisation fait alors directement office de composé gazeux.

En phase de charge, lors de laquelle le composé gazeuxest libéré, celui-ci est avantageusement évacué par le haut du ou des compartiments avec le gaz de fluidisation.

Les compartiments 8.1, 8.2, 8.3 sont séparés par des parois permettant un passage du matériau de stockage d'un compartiment à l'autre par débordement à une hauteur donnée. Plus précisément, les compartiments 8.1, 8.2, 8.3 sont agencés de sorte que, lorsque le lit fluidisé atteint une hauteur donnée, le matériau de stockage déborde du compartiment 8.1 et s'écoule dans le compartiment 8.2, et lorsque le matériau de stockage déborde du compartiment 8.2 il s'écoule dans le compartiment 8.3. Enfin, lorsque le matériau de stockage déborde du compartiment 8.3 il s'écoule dans un dispositif de récupération (non représenté) qui peut former soit un dispositif de stockage du matériau de stockage, soit un dispositif de transfert vers une zone de stockage. Le compartiment 8.1 sera désigné "compartiment amont" et le compartiment 8.3 sera désigné "compartiment aval".

Les compartiments peuvent être ouverts à leur extrémité supérieure, le matériau passant par-dessus les parois de séparation ou alors les parois comportent une ouverture à la hauteur donnée pour permettre l'écoulement d'un compartiment à l'autre. De préférence, le matériau débordant d'un compartiment alimente le compartiment suivant au niveau du pied du compartiment suivant via une jambe de transfert 15 comme cela est schématisé sur la figure 2C.

Les quantités de matériau dans chaque compartiment peuvent être différentes. Dans le cas de compartiment ayant la même section, la hauteur de débordement peut être différente. Néanmoins pour des raisons de simplicité de commande du système, les compartiments sont de préférence identiques et contiennent simultanément la même quantité de matériau de stockage.

Le système de stockage comporte également des moyens d'alimentation 11 en matériau de stockage du compartiment amont 8.1, par exemple sous la forme d'une trémie reliée à une zone de stockage de matériau d'entreposage. Les compartiments 8.2 et 8.3 sont alimentés en matériau de stockage par l'intermédiaire du compartiment amont 8.1.

Il pourrait également être envisagé dans certains cas particuliers des moyens d'alimentation propre à chaque compartiment.

Le système de stockage comporte également des moyens de circulation 12 d'un fluide caloporteur à travers ou dans les compartiments 8.1, 8.2, 8.3 permettant d'assurer un échange thermique entre le matériau de stockage et le caloporteur.

En outre, le système de stockage comporte des moyens 13 de contrôle ou régulation de la vitesse d'entrée du gaz de fluidisation à travers chacun des compartiments, ces moyens contrôlant la vitesse d'entrée du de fluidisation en fonction de la puissance thermique transportée par le caloporteur en entrée du système.

La puissance thermique transportée par le caloporteur peut être prise en compte par la mesure de la température du fluide caloporteur, par la mesure du débit du fluide caloporteur ou à la fois de manière préférentielle par la mesure de la température et du débit du fluide caloporteur. Ainsi les moyens de contrôle de la vitesse d'entrée du gaz de fluidisation font varier la vitesse en fonction de la température et/ou du débit fluide caloporteur en entrée du système de stockage. Le système comporte des moyens de mesure de la puissance thermique transportée par le caloporteur en entrée du système, par exemple ces moyens de mesure sont formés par un capteur de température ou un dispositif de mesure du débit de caloporteur.

La variation de la vitesse d'entrée du gaz de fluidisation peut être obtenue en modifiant le débit du gaz ou en modifiant la section de passage du gaz.

Par exemple, les moyens de régulation comportent une vanne de régulation sur la ligne de gaz de fluidisation en amont du lit fluidisé pilotée par exemple par la mesure de débit sur le fluide caloporteur. L'ouverture de la vanne régulant la vitesse d'entrée du gaz de fluidisation est préalablement étalonnée en fonction d'un débit de fluide caloporteur test dont on connaît les températures Te et Ts, ce qui donne la puissance de stockage thermique.

Les moyens de circulation 12 traversent successivement tous les compartiments. Ils comportent une extrémité d'alimentation 12.1 et une extrémité d'évacuation 12.2. Dans les exemples représentés, les moyens de circulation 12 sont tels que le fluide caloporteur circule à contre-courant du matériau de stockage lors de son écoulement par débordement du compartiment 8.1 vers le compartiment 8.3.

Alternativement, on pourrait envisager des circulations du fluide caloporteur et du matériau à co-courant.

Ainsi, l'extrémité d'entrée 12.1 est située du côté du compartiment aval 8.3 de sorte que le fluide caloporteur entre dans le système de stockage par le compartiment aval 8.3 et l'extrémité d'évacuation 12.1 est située du côté du compartiment amont 8.1 de sorte que le fluide caloporteur sorte du système de stockage par le compartiment amont 8.1.

En phase de charge, l'extrémité d'alimentation 12.1 est connectée à une source d'alimentation en fluide caloporteur chaud de sorte que le fluide caloporteur transfert sa chaleur pour mettre en oeuvre la réaction chimique endothermique du matériau de stockage et, en phase de décharger, l'extrémité d'alimentation est connectée à une source d'alimentation en fluide froid de sorte que le fluide caloporteur absorbe de la chaleur libérée parla réaction chimique exothermique du matériau de stockage.

Les moyens de circulation sont par exemple formés par un tube traversant chacun des compartiments. De manière avantageuse, le tube présente une forme augmentant la surface d'échange thermique, par exemple une forme de serpentin.

Sur la figure 3A, on peut voir en vue de côté un système de stockage dans lequel les compartiments sont cloisonnés. Chaque compartiment comporte trois cloisons 14 formant des chicanes.

Sur la figure 3B, on peut voir en vue de dessus un exemple d'un compartiment du système de stockage de la figure 3A.

Le compartiment 8.1 comporte quatre cloisons 14 délimitant des chicanes. En outre, les moyens de circulation du caloporteur (non représentés) sont intégrés dans les parois du compartiment. De manière très avantageuse, les angles formés entre les cloisons et les parois du compartiment sont comblés afin d'éviter les zones mortes d'accumulation du matériau de stockage.

Sur la figure 3C, on peut voir une variante dans laquelle les moyens de circulation 112 sont intégrés dans les cloisons sous la forme d'une pluralité de tubes.

La surface d'échange thermique peut être dimensionnée en régime nominal en fonction de l'avancement de la réaction et donc de la quantité de chaleur absorbée par la réaction ou libérée par la réaction.

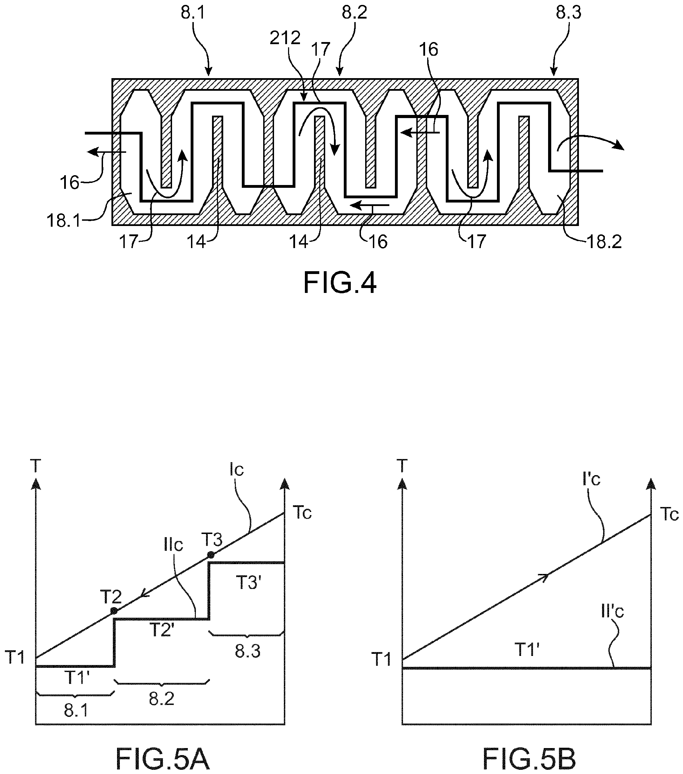

Sur la figure 4, on peut voir, en vue de dessus représenté schématiquement un exemple de système de stockage thermique dans lequel chaque compartiment comporte des cloisons 14 formant des chicanes comme pour les exemples de figures 3A et 3B, mais les moyens de circulation de caloporteur 212 sont disposés entre les cloisons. Par exemple, les moyens de circulation sont formés par des tubes ayant une forme correspondante à celle délimitée par les chicanes.

Les flèches 16 symbolisent la circulation du caloporteur au sein du compartiment et les flèches 17 symbolisent l'écoulement du matériau de stockage au sein de chaque compartiment.

Les moyens d'alimentation en matériau de stockage sont alors disposés au dessus du compartiment amont 8.1 au droit du premier sous-compartiment 18.1 en considérant le sens de circulation du matériau de stockage. Ainsi, le matériau de stockage s'écoule du premier sous-compartiment 18.1 du compartiment amont 8.1 entre les chicanes vers le dernier sous-compartiment 18.2 du compartiment amont 8.1 et s'écoule ensuite par débordement dans le compartiment 8.2.

Le fonctionnement du système de stockage représenté sur la figure 3 va maintenant être décrit. Il est considéré que le système de stockage est connecté à un champ solaire 2 et à une turbine 4 comme cela est schématisé sur la figure 1. Dans ce cas, la température du caloporteur entrant dans le système de stockage 6 est sensiblement constante et est égale soit à Tc en phase de charge, soit à T1 en phase de décharge, en revanche c'est le débit de caloporteur qui est modulé pour maintenir la température de sortie Tc sensiblement constante malgré les variations d'ensoleillement au cours de la journée.

A titre d'exemple, le matériau de stockage est CaO/Ca(OH)$_2$.

En début de phase de charge, les moyens d'alimentation en Ca(OH)$_2$ sont actionnés, ainsi que les moyens de fluidisation. Le Ca(OH)$_2$ s'écoule dans le premier sous-compartiment du compartiment amont 8.1 et du fait du gaz de fluidisation, le matériau de stockage est fluidisé, il s'écoule dans le sous-compartiment suivant jusqu'à atteindre le sous compartiment 18.2 et déborder vers le compartiment 8.2 puis le compartiment 8.3. La vitesse d'entrée du gaz de fluidisation est initialement réglée pour un fonctionnement nominal de la centrale solaire.

Le fluide caloporteur circule à contre-courant dans les compartiments.

En phase de charge, le caloporteur est chaud et cède de la chaleur. Il entre dans le système par l'entrée d'alimentation 12 à une température Tc Le gaz de fluidisation est sec de sorte que le Ca(OH)$_2$ est déshydraté. Selon l'invention, les moyens de régulation de la vitesse d'entrée du gaz de fluidisation mesurent le débit de caloporteur entrant dans le système et adaptent la vitesse d'entrée du gaz fluidisation en fonction du débit de caloporteur et donc de la puissance thermique disponible pour le stockage dans le matériau de stockage. Le choix de la vitesse d'entrée du gaz de fluidisation détermine la quantité de matériau de stockage présente dans chaque compartiment. En augmentant la vitesse d'entrée du de gaz de fluidisation, on tend à diminuer la densité du matériau de stockage et on augmente la hauteur du lit fluidisé, ce qui provoque son débordement et donc le transfert du matériau de stockage vers le compartiment suivant ou alors vers le dispositif de récupération. Le gaz de fluidisation et le composé gazeux généré lors de la déshydratation sont évacués par le haut des compartiments.

Par exemple, lorsque le débit de caloporteur chute, la vitesse d'entrée du gaz de fluidisation est augmentée. Ceci a pour effet d'augmenter la porosité du lit. Le solide en excès déborde donc de compartiment en compartiment jusqu'à ce que le système atteigne un nouvel équilibre. La quantité de solide présente dans le système de stockage et donc la densité du solide dans le(s) lit(s) fluidisé(s) sont donc réduites. Si on considère que la variation de puissance est due à une variation de débit, la température d'entrée étant constante, l'invention permet de maintenir la température de sortie constante et donc de maintenir le gradient de température constant aux bornes du système.

Lorsque la puissance à stocker augmente, la vitesse d'entrée du vitesse d'entrée du gaz de fluidisation est réduite et du fait de l'alimentation continue en matériau de stockage, la quantité de matériau dans les compartiments augmente et peut réagir pour absorber la chaleur disponible.

Le caloporteur traverse successivement chaque compartiment en passant d'un sous-compartiment à l'autre et voit sa température diminuée par palier.

Au niveau de l'extrémité d'évacuation 12.2, sa température est T1.

Le temps de séjour du matériau de stockage dans le système est déterminé en fonction de la durée de la réaction.

Sur la figure 5A, on peut voir représenté graphiquement la variation de température du caloporteur désignée par Ic au sein du système de la figure 2A en phase de charge du matériau de stockage et le profil de température du matériau de stockage dans chacune des compartiments désigné IIc.

Le fluide caloporteur chaud rencontre le compartiment aval 8.3 qui est à une température T3'. Le fluide caloporteur sort de ce compartiment 8.3 à une température T3 légèrement supérieure à T3', il rentre ensuite dans le compartiment 8.2 qui est à une température T2' et en ressort à une température légèrement supérieure, T2. Enfin, il circule à travers le compartiment amont 8.1 à la température T1' et en sort à la température souhaitée T1.

La mise en oeuvre de plusieurs compartiments permet de rapprocher l'écoulement du matériau de stockage de celui d'un écoulement de type piston, qui est avantageux pour les profils de conversion, et permet d'améliorer les transferts thermiques. En effet, si l'on assimile un compartiment à

Un échangeur à courants croisés, la mise en série de trois compartiments de ce type permet d'augmenter l'efficacité selon la formule :

$$\varepsilon_t = \frac{1 - \left(\dfrac{1 - \varepsilon.R}{1 - \varepsilon}\right)^n}{R - \left(\dfrac{1 - \varepsilon.R}{1 - \varepsilon}\right)^n}$$

Avec n, le nombre de compartiments en série et R le rapport des capacités thermiques (<1) et $\varepsilon$ l'efficacité d'un échangeur. Ainsi, pour un compartiment d'efficacité égale à 0,6, l'efficacité globale de trois compartiments de ce type placés en série devient égale à 0,87. Par conséquent, la compartimentation du lit fluidisé permet soit d'obtenir un gradient de température aux bornes du système de stockage plus important soit de diminuer la surface d'échange nécessaire et donc d'améliorer la compacité du système.

Plus le nombre de compartiments est augmenté plus l'efficacité est améliorée. Néanmoins le coût de réalisation du système est pris en compte par rapport au gain d'efficacité.

De plus, en compartimentant le lit fluidisé, deux des compartiments fonctionneront à des températures, T2' et T3', supérieures à T1' qui correspond à la température du lit fluidisé mono-compartimenté. Dans le cas de la réaction de déshydratation, l'augmentation de la température du milieu réactionnel permet d'accélérer la cinétique de réaction. Ainsi, plus la température du compartiment sera élevée, plus le temps de séjour requis sera faible ce qui signifie que les dimensions des compartiments pourront être également optimisées selon la température opératoire.

Les chicanes définissent des sous-compartiments au sein de chaque compartiment, ces sous-compartiments ayant un effet similaire à celui de la compartimentation en trois compartiments 8.1, 8.2, 8.3, i.e. la variation de température dans chaque sous-compartiment du caloporteur se fait par palier, chaque sous-compartiment définissant un palier de température. Ainsi, la mise en oeuvre de chicanes dans chaque compartiment permet encore de rapprocher l'écoulement du matériau au sein de chaque compartiment de celui d'un écoulement piston. La présence de zones mortes est évitée et permet de minimiser la dispersion axiale des réactifs en présentant un front de réaction qui avance le long du réacteur, toutes les particules possèdent un temps de séjour sensiblement identique au sein du lit fluidisé.

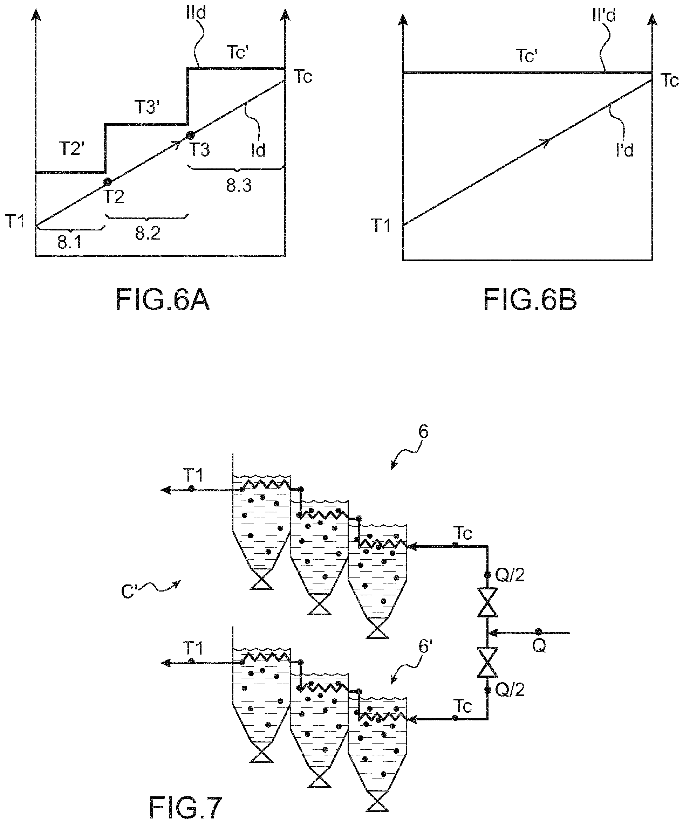

Sur la figure 6A, on peut voir représenté graphiquement la variation de température du caloporteur désigné Id au sein du système en phase de décharge du matériau de stockage de la figure 2B et le profil de température du matériau de stockage désigné IId dans chacun des compartiments.

Pendant la décharge, le gaz de fluidification et le composé gazeux circule dans les compartiments. Le fluide caloporteur à l'entrée du système de stockage est à une température, T1, inférieure à la température de sortie Tc. Du fait de la compartimentation du lit fluidisé, le fluide caloporteur passe successivement de T1 à T2, puis de T2 à T3 et enfin de T3 à Tc au fur et à mesure de la traversée des trois compartiments en série respectivement aux températures T2', T3' et Tc'.

De la même manière que pour la phase de charge, la compartimentation en série du lit fluidisé permet avantageusement d'améliorer la conversion, l'efficacité globale du transfert thermique et la compacité du système.

En fin de phase de charge ou de décharge, les compartiments peuvent être vidangés afin de retirer le matériau de stockage n'ayant pas réagi, par exemple au moyen d'une évacuation ménagée dans le fond de chaque compartiment et obturée par une trappe, ou alors les compartiments ne sont pas vidangés, et le matériau n'ayant pas réagi est poussé et évacué par le matériau de stockage délivré par les moyens d'alimentation lors de la phase suivante.

Comme indiqué ci-dessus un système avec un seul compartiment alimenté en continu dont le matériau déborde vers une zone de récupération entre dans le cadre de la présente invention. Ce compartiment peut comporter des chicanes ou non.

Le graphique de la figure 5B représente le profil de température du lit fluidisé désigné IIc' et du caloporteur désigné Ic' dans le cas d'un système comportant un seul compartiment sans sous-compartiment en phase de charge. Le lit fluidisé se trouve à une température T1', le fluide caloporteur rentre à Tc et ressort à T1. En phase de décharge, le lit fluidisé se trouve à une température Tc' (courbe désignée IId'), le fluide caloporteur rentrant à T1, ressort à Tc (courbe désignée Id'), comme cela est représenté sur le graphique de la figure 6B.

Il sera compris qu'un système de stockage à un compartiment permet de maintenir une température de caloporteur en sortie constante, et de réaliser un stockage/déstockage continu. Un système à plusieurs compartiments offre avantageusement une efficacité globale du transfert de chaleur améliorée.

Dans un autre exemple de réalisation, on peut prévoir un ensemble de stockage comportant deux systèmes de stockage 6, 6' selon l'invention alimentés en parallèle en caloporteur et en matériau de stockage et des moyens de commande de la circulation du caloporteur dans l'un et/ou l'autre des systèmes. Dans l'exemple représenté, chaque système comporte trois compartiments agencés comme ceux de la figure 7 et communiquant par débordement. Grâce à cet ensemble, il est possible d'absorber une variation plus importante de puissance thermique. Par exemple, chaque système est alimenté par un débit Q/2 de caloporteur. Si la puissance chute d'un facteur 2, à température d'entrée constante, le débit de caloporteur sera divisé par 2. Il est alors possible de n'utiliser qu'un seul des deux systèmes pilotant les moyens de commande afin de conserver une température constante de caloporteur en sortie du système de stockage lors des étapes de stockage ou de déstockage.

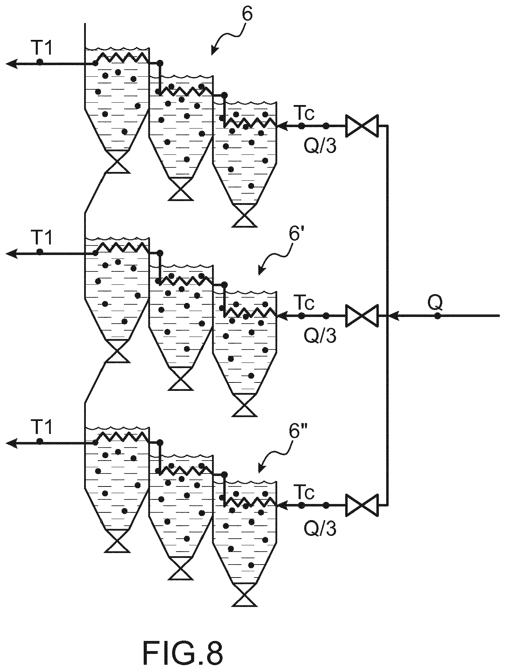

Sur la figure 8, on peut voir un ensemble de stockage comportant trois systèmes de stockage 6, 6' et 6" selon l'invention alimentés en parallèle en caloporteur et en matériau de stockage. Chaque système est alimenté par un débit Q/3 de caloporteur. Si la puissance chute d'un facteur 3, à température d'entrée constante, le débit de caloporteur sera divisé par 3. Il est alors possible de n'utiliser qu'un seul des trois systèmes pilotant les moyens de commande afin de conserver une température constante de caloporteur en sortie du système de stockage lors des étapes de stockage ou de déstockage.

Dans une variante de réalisation, on peut prévoir de disposer de moyens additionnels pour modifier la quantité de matériau de stockage dans le ou les compartiments. Par exemple, ces moyens additionnels comportent une trappe à solide en pied de chaque compartiment afin de permettre une vidange d'au moins une partie du matériau de stockage. Ainsi, lorsque la puissance thermique chute, la vanne de la trappe à solide s'ouvre de manière à vidanger une partie du solide contenu dans le compartiment et la vitesse d'entrée du gaz de fluidisation est modifiée. Cette vanne est régulée par la puissance thermique en entrée du système. Par exemple un dispositif de pesée est placé en aval de la vanne pour maîtriser la quantité de solide évacuée. Ainsi la régulation de la quantité de matériau de stockage est obtenue par la variation de la vitesse d'entrée du gaz de fluidisation et par l'évacuation par gravité du matériau de stockage.

Lorsque la vitesse d'entrée du gaz de fluidisation est diminuée, ce qui diminue également le débit de gaz de fluidisation, par exemple afin d'absorber plus de puissance, le compartiment se remplit progressivement. Avantageusement, on peut prévoir simultanément à une baisse du débit de gaz de fluidisation, une augmentation du débit d'alimentation en matériau de stockage.

La régulation de la vitesse d'entrée du gaz est de préférence commune à tous les compartiments pour obtenir un système plus simple. Néanmoins, on pourrait envisager une régulation de la vitesse d'entrée du gaz indépendante pour chaque compartiment ce qui permettrai d'affiner la puissance en fonction de la cinétique.

La phase de charge s'effectue donc selon les étapes suivantes :

- Remplissage du ou des compartiments en matériau de stockage dans un état apte à stocker de la chaleur,
- Circulation d'un gaz de fluidisation,
- Circulation d'un caloporteur apte à céder de la puissance thermique dans un échangeur thermique avec le matériau de stockage, de sorte qu'une réaction chimique avec le matériau de stockage ait lieu afin qu'il absorbe la chaleur dans le ou les compartiments,
- Mesure de la puissance thermique à stocker transportée par le caloporteur,
- Modification de la vitesse d'entrée du gaz de fluidisation en fonction de l'écart entre ladite puissance mesurée et une puissance nominale.

Et la phase de décharge s'effectue donc selon les étapes suivantes :

- Remplissage du ou des compartiments en matériau de stockage dans un état apte à déstocker la chaleur,
- Circulation d'un gaz de fluidisation et d'un composé gazeux apte à assurer une réaction chimique avec le matériau de stockage, par exemple de l'eau sous forme vapeur, afin qu'il libère de la chaleur dans le ou les compartiments,
- Circulation d'un caloporteur apte à capter de la puissance thermique dans un échangeur thermique avec le matériau de stockage,
- Mesure de la puissance thermique transportée par le caloporteur,
- Modification de la vitesse d'entrée du gaz de fluidisation en fonction de l'écart entre ladite puissance mesurée et une puissance nominale également appelée une valeur consigne de puissance.

Comme mentionné ci-dessus, une étape de vidange peut avoir lieu entre une phase de décharge et de charge. Le matériau transformé lors d'une phase de charge est stocké et est ensuite chargé dans la zone d'alimentation en vue d'une phase de décharge.

La production de matériau chargé en énergie thermique est continue pendant une phase de charge. Le matériau de stockage ainsi chargé peut être stocké dans des conteneurs par exemple pour être utilisé dans une autre installation. Par exemple, le système de stockage peut être associé à une installation qui produit de la chaleur mais ne la consomme pas, contrairement à une centrale solaire. Cette chaleur est alors récupérée et est utilisée dans une installation pouvant valoriser cette chaleur.

Grâce à la mise en oeuvre de réactions de stockage dans des lits fluidisés, on obtient de bons transferts thermiques entre le matériau de stockage et le caloporteur puisque les coefficients de transferts au sein d'un lit fluidisé sont suffisamment importants pour ne pas être limitants. Les températures sont homogènes au sein du lit fluidisé et les coefficients de transfert y sont environ 10 à 100 fois supérieurs à ceux en lit fixe.

En outre, en lit fluidisé, la variation de volume des particules lors de la réaction par exemple d'hydratation dans le cas du couple $CaO/Ca(OH)_2$ n'a pas d'impact sur l'installation contrairement à un lit fixe.

Le système de stockage selon l'invention permet un fonctionnement en continu, contrairement au stockage en lit fixe qui impose de travailler en discontinu avec des étapes de remplissage et de vidange du réacteur. Le fonctionnement en continu permet soit une production plus importante, soit d'utiliser des réacteurs de plus petites dimensions par rapport à ceux en lit fixe. La possibilité d'utiliser des réacteurs de plus petites dimensions est particulièrement intéressante, puisque dans ce cas les transferts peuvent être plus facilement optimisés, par exemple en augmentant le rapport surface d'échange/volume de réactifs.

De plus, grâce à l'invention il est possible de dissocier l'énergie et la puissance dans le lit fluidisé du fait de la circulation du solide, ce qui n'est pas possible en lit fixe sans changer de réacteur.

En outre, grâce à l'invention, la taille de particules n'est pas limitante. En effet, dans un lit fluidisé, les pertes de charge ne dépendent pas de la quantité de solide à traiter alors que dans un lit fixe elles augmentent avec l'épaisseur du lit fixe et la diminution de la taille des particules. Il devient alors très difficile, voire impossible, dans un lit fixe, de traiter des particules de taille inférieure à 100 $\mu$m d'après la loi d'Ergun.

Dans le cas de particules de très petites tailles ou dont le volume varie sensiblement lors de la réaction chimique de stockage/déstockage thermique, on utilise avantageusement des particules inertes par exemple du SiC ayant une taille supérieure, en mélange avec les particules du matériau de stockage. Ces particules inertes de plus grosse taille imposent alors le comportement au lit fluidisé.

Un exemple de dimensionnement va maintenant être décrit à titre d'exemple uniquement et non limitatif. Le matériau de stockage est le couple $CaO/Ca(OH)_2$.

Le réacteur a par exemple un diamètre de 114 mm et une hauteur 1,4 m permettant de charger 1,5 kg de $Ca(OH)_2$. La réaction de déshydratation a été mise en oeuvre à 450°C avec un taux d'humidité de 0% (85% de conversion en 30 minutes). La réaction d'hydratation a été mise en oeuvre à 350°C pour un taux d'humidité de 0,2 kg d'eau/kg d'air sec (100% de conversion en 20 minutes).

Considérons des particules d'oxyde de calcium de 200 $\mu$m de diamètre nominal et dont la masse volumique apparente vaut 1000 kg·m$^{-3}$. Pour un lit dont la hauteur en lit fixe est égale à 1 m, la vitesse minimale de fluidisation et la vitesse de transport sont respectivement 0,014 m·s$^{-1}$ et 0,75 m·s$^{-1}$. Le calcul est effectué aux vitesses limites de fonctionnement du lit fluidisé afin d'estimer la variation maximale de puissance que peut absorber le lit fluidisé.

La vitesse du régime nominal est estimée à 0,25 m·s$^{-1}$. Dans ce cas, la hauteur du lit fluidisé est égale à 1,41 m pour une porosité de lit de 0,57. La hauteur des parois inter-compartiments du réacteur dédié au stockage thermochimique sera donc de 1,40 m.

Si l'on souhaite diminuer la densité du lit, on fait circuler le gaz de fluidisation à une vitesse supérieure à la vitesse nominale, qui peut être au maximum égale à la vitesse de transport, soit 0,75 m·s$^{-1}$. Dans ce cas, la hauteur du lit est de 2,28 m pour une porosité de 0,75. L'augmentation de la hauteur au-dessus de la paroi du compartiment induit le débordement du lit dans le compartiment suivant. Le nombre de particules présentes dans le lit aura donc diminué d'un facteur égale à :

$$\frac{(1-0,57)}{(1-0,75)} = 1,7$$

En conclusion, il est possible d'absorber une diminution du débit de fluide caloporteur d'un facteur 1,7 en modifiant la vitesse du gaz de fluidisation.

A l'inverse, si le débit de fluide caloporteur augmente, le lit est densifié pour maintenir le gradient de température constant. Dans ce cas, on réduit la vitesse de fluidisation à la vitesse minimale de fluidisation. La porosité diminue de 0,57 à 0,48 et la hauteur du lit fluidisé diminue de 1,41 à 1,15 m. Il est alors possible de rajouter des particules jusqu'à atteindre une hauteur de lit fluidisé de 1,40 m (limite au-delà de laquelle le lit déborde dans le compartiment suivant). Dans ce cas la variation de quantité de solide vaut :

$$\frac{(1-0,41)}{(1-0,57)} = 1,4$$

Il est donc possible d'absorber une augmentation du débit de fluide caloporteur d'un facteur 1,4.

La variation totale de quantité de solide présente dans un compartiment peut varier entre une porosité de (1-0,41) et (1-0,75). La puissance absorbée ou régénérée peut donc varier d'un facteur 2,4 au sein d'un même compartiment tout en maintenant un gradient de température constant aux bornes du système de stockage.

Dans le cas d'un ensemble de stockage mettant en oeuvre trois systèmes de stockage en parallèle (figure 8), la variation maximale du débit de caloporteur et donc de la puissance fournie ou retirée au système de stockage est d'un facteur 7,5.

Le système de stockage selon l'invention offre donc une grande capacité d'adaptation aux variations de puissance.

## Revendications

1. Système de stockage thermique par voie thermochimique comportant au moins un compartiment (8.1), dit compartiment amont, destiné à contenir un matériau de stockage thermique (M), des moyens d'alimentation (11) du compartiment amont en matériau de stockage thermique, des moyens de circulation (10) dans le compartiment amont d'un gaz de fluidisation de sorte à former un lit fluidisé dans ledit compartiment amont (8.1) avec le matériau de stockage, des moyens de circulation (12) d'un caloporteur dans ledit compartiment amont (8.1) de sorte à assurer des échanges thermiques avec le matériau de stockage, le système étant **caractérisé en ce qu'**il comporte des moyens de régulation (13) de la vitesse d'entrée du gaz de fluidisation en fonction de la puissance thermique transportée par le fluide caloporteur en entrée du système de stockage, de sorte que la température du caloporteur en sortie du système de stockage thermique soit maintenue sensiblement constante.

2. Système de stockage thermique selon la revendication 1, comportant au moins un autre compartiment (8.3), dit compartiment aval, lesdits compartiments amont (8.1) et aval (8.3) étant agencés de sorte que le matériau contenu dans le compartiment amont (8.1) puisse s'écouler vers le compartiment aval (8.3) par débordement lorsque le lit fluidisé dans le compartiment amont atteint une première hauteur donnée, des moyens de circulation (10) d'un gaz de fluidisation dans ledit compartiment aval (8.3), et des moyens de régulation (13) de la vitesse d'entrée du gaz de fluidisation dans le compartiment aval (8.3) en fonction de la puissance thermique transportée par le fluide caloporteur en entrée du système de stockage, les moyens de circulation (12) du caloporteur traversant le compartiment amont et le compartiment aval.

3. Système de stockage thermique selon la revendication 2, comportant au moins compartiment supplémentaire (8.2), des moyens de circulation (10) d'un gaz de fluidisation dans ledit compartiment supplémentaire, et des moyens de régulation (13) de la vitesse d'entrée du gaz de fluidisation en fonction de la puissance thermique transportée par le fluide caloporteur en entrée du système de stockage, ledit compartiment supplémentaire (8.2) étant agencé par rapport au compartiment amont (8.1) et au compartiment aval (8.3) de sorte que le matériau contenu dans le compartiment amont (8.1) s'écoule dans le compartiment supplémentaire (8.2) par débordement lorsque le lit fluidisé du compartiment amont (8.1) atteint la première hauteur donnée, et le matériau contenu dans le compartiment supplémentaire (8.2) s'écoule vers le compartiment aval (8.3) par débordement lorsque le lit fluidisé dans le compartiment supplémentaire (8.2) atteint une deuxième hauteur donnée, les moyens de circulation (12) du caloporteur traversant le compartiment amont (8.1), le compartiment supplémentaire (8.2) et le compartiment aval (8.3).

4. Système de stockage thermique selon la revendication 2 ou 3, dans lequel les moyens de circulation du caloporteur sont tels que le caloporteur circule du compartiment aval (8.3) vers le compartiment amont (8.1).

5. Système de stockage selon l'une des revendications 1 à 4, comportant des moyens de circulation dans l'un ou les compartiments d'un composé gazeux, ledit composé gazeux étant destiné à réagir avec le matériau de stockage pour provoquer la libération de la chaleur et étant libéré lors du stockage de la chaleur.

6. Système de stockage thermique selon l'une des revendications 1 à 5, dans lequel au moins le ou au moins l'un des compartiments (8.1, 8.2, 8.3) est divisé en au moins deux sous-compartiments (18.1, 18.2) en communication, de sorte que le matériau de stockage s'écoule d'un sous-compartiment à l'autre avant de s'écouler par débordement hors dudit compartiment, les sous-compartiments étant avantageusement délimités pas des cloisons (14) formant chicanes et les moyens de circulation de caloporteur étant avantageusement formés dans les cloisons (14).

7. Système de stockage thermique selon l'une des revendications 1 à 6, dans lequel les moyens de circulation de caloporteur sont formés dans des parois du ou des compartiments (8.1, 8.2, 8.3).

8. Système de stockage thermique selon l'une des revendications 1 à 7, dans lequel le gaz de fluidisation et le composé gazeux sont mélangés avant de circuler dans le ou les compartiments.

9. Système de stockage thermique selon l'une des revendications 1 à 8 en combinaison avec la revendication 2 ou 3, dans lequel les moyens de régulation de la vitesse d'entrée du gaz de fluidisation sont communs à tous les compartiments.

10. Système de stockage thermique selon l'une des revendications 1 à 9, dans lequel la puissance thermique transportée par le caloporteur est déterminée par la mesure du débit de caloporteur en entrée du système de stockage thermique et/ou de la température du caloporteur en entrée.

11. Ensemble de stockage thermique comportant au moins deux systèmes de stockage selon l'une des revendications 1 à 10, lesdits systèmes de stockage étant connectés en parallèle aux moyens d'alimentation en caloporteur, ledit ensemble comportant des moyens de commande de la circulation du caloporteur dans la ou les systèmes de stockage.

12. Installation de stockage comportant au moins un système de stockage selon l'une des revendications 1 à 10 ou au moins un ensemble selon la revendication 11, comportant une zone pour entreposer du matériau de stockage prêt à stocker de l'énergie thermique et une zone pour entreposer du matériau de stockage prêt à fournir de l'énergie thermique, et du matériau de stockage, le matériau de stockage étant avantageusement mélangé avec un matériau particulaire inerte, par exemple du SiC, et le matériau de stockage prêt à stocker de l'énergie thermique étant avantageusement du $Ca(OH)_2$ et le matériau de stockage prêt à fournir de l'énergie thermique étant avantageusement du CaO.

13. Centrale solaire comportant un champ solaire (2), un système de conversion (4) de l'énergie thermique produite par le champ solaire (2) en énergie électrique et au moins une installation de stockage thermique selon la revendication 12, le système de conversion (4) et l'installation de stockage étant connectés en parallèle avec le champ solaire.

14. Procédé de stockage thermique par voie thermochimique dans un matériau de stockage comportant les étapes:

a1) Remplissage d'un ou de plusieurs compartiments en matériau de stockage dans un état apte à stocker de la chaleur, ledit remplissage étant avantageusement continu,
b1) Circulation d'un gaz de fluidisation dans le ou les compartiments,
c1) Circulation d'un caloporteur apte à céder de la puissance thermique dans un échangeur thermique avec le matériau de stockage dans le ou les compartiments, de sorte qu'une réaction chimique avec le matériau de stockage ait lieu afin que le matériau de stockage absorbe la chaleur dans le ou les compartiments,
d1) Mesure de la puissance thermique à stocker transportée par le caloporteur, avantageusement par mesure du débit et/ou de la température du caloporteur avant sa traversée du ou des compartiments,
e1) Modification de la vitesse d'entrée du gaz de fluidisation en fonction de l'écart entre ladite puissance mesurée et une puissance nominale.

15. Procédé de déstockage thermique par voie thermochimique dans un matériau de stockage comportant les étapes:

a2) Remplissage du ou des compartiments en matériau de stockage dans un état apte à déstocker la chaleur, ledit remplissage étant avantageusement continu,
b2) Circulation d'un gaz de fluidisation et d'un composé gazeux apte à assurer une réaction chimique avec le matériau de stockage afin qu'il libère de la chaleur dans le ou les compartiments,
c2) Circulation d'un caloporteur apte à capter de la puissance thermique dans un échangeur thermique avec le matériau de stockage,
d2) Mesure de la puissance thermique transportée par le caloporteur, avantageusement par mesure du débit et/ou de la température du caloporteur avant sa traversée du ou des compartiments,

e2) Modification de la vitesse d'entrée du gaz de fluidisation en fonction de l'écart entre ladite puissance mesurée et une puissance nominale.

**Patentansprüche**

1. System zur thermochemischen Wärmespeicherung, umfassend wenigstens eine Kammer (8.1), genannt stromaufwärtige Kammer, welche dazu vorgesehen ist, ein Material zur Wärmespeicherung (M) aufzunehmen, Mittel zur Beliefern (11) der stromaufwärtigen Kammer mit Material zur Wärmespeicherung, Mittel zur Zirkulation (10) in der stromaufwärtigen Kammer eines Fluidisierungsgases, so dass ein fluidisiertes Bett in der stromaufwärtigen Kammer (8.1) mit dem Speichermaterial gebildet wird, Mittel zur Zirkulation (12) eines Wärmeüberträgers in der stromaufwärtigen Kammer (8.1), so dass thermischer Austausch mit dem Speichermaterial sichergestellt wird, das System **dadurch gekennzeichnet, dass** es Mittel zur Regulierung (13) der Geschwindigkeit des Eintritts von Fluidisierungsgas als Funktion der von dem Wärmeüberträger transportierten thermischen Leistung beim Eintritt in das Speichersystem umfasst, so dass die Temperatur des Wärmeüberträgers am Ausgang des Systems zu Wärmespeicherung im Wesentlichen konstant gehalten wird.

2. System zur Wärmespeicherung nach Anspruch 1, umfassend wenigstens eine weitere Kammer (8.3), genannt stromabwärtige Kammer, wobei die stromaufwärtige (8.1) und die stromabwärtige (8.3) Kammer derart angeordnet sind, dass das in der stromaufwärtigen Kammer (8.1) aufgenommene Material zu der stromabwärtigen Kammer (8.3) durch Überlauf strömen kann, wenn das fluidisierte Bett in der stromaufwärtigen Kammer eine erste gegebene Dicke erreicht, Mittel zur Zirkulation (10) eines Fluidisierungsgases in der stromabwärtigen Kammer (8.3) und Mittel zur Regulierung (13) der Geschwindigkeit des Eintritts des Fluidisierungsgases in die stromabwärtige Kammer (8.3) als Funktion der von dem Wärmeüberträgerfluid transportierten thermischen Leistung beim Eintritt in das Speichersystem, wobei die Mittel zur Zirkulation (12) des Wärmeüberträgers die stromaufwärtige Kammer und die stromabwärtige Kammer durchqueren.

3. System zur Wärmespeicherung nach Anspruch 2, umfassend wenigstens eine ergänzende Kammer (8.2), Mittel zur Zirkulation (10) eines Fluidisierungsgases in der ergänzenden Kammer und Mittel zur Regulierung (13) der Geschwindigkeit des Eintritts des Fluidisierungsgases als Funktion der von dem Wärmeüberträgerfluid transportierten thermischen Leistung beim Eintritt in das Speichersystem, wobei die ergänzende Kammer (8.2) bezüglich der stromaufwärtigen Kammer (8.1) und der stromabwärtigen Kammer (8.3) derart angeordnet ist, dass das in der stromaufwärtigen Kammer (8.1) aufgenommene Material durch Überlauf in die ergänzende Kammer (8.2) strömt, wenn das fluidisierte Bett der stromaufwärtigen Kammer (8.1) die erste gegebene Dicke erreicht, und das in der ergänzenden Kammer (8.2) enthaltene Material durch Überlauf zu der stromabwärtigen Kammer (8.3) strömt, wenn das fluidisierte Bett in der ergänzenden Kammer (8.2) eine zweite gegebene Dicke erreicht, wobei die Mittel zur Zirkulation (12) des Wärmeüberträgers die stromaufwärtige Kammer (8.1), die ergänzende Kammer (8.2) und die stromabwärtige Kammer (8.3) durchqueren.

4. System zur Wärmespeicherung nach Anspruch 2 oder 3, wobei die Mittel zur Zirkulation des Wärmeüberträgers derart sind, dass der Wärmeüberträger von der stromabwärtigen Kammer (8.3) zu der stromaufwärtigen Kammer (8.1) strömt.

5. Speichersystem nach einem der Ansprüche 1 bis 4, umfassend Mittel zur Zirkulation einer Gasverbindung in der einen oder den mehreren Kammern, wobei die Gasverbindung dazu vorgesehen ist, mit dem Speichermaterial zu reagieren, um die Freisetzung von Wärme hervorzurufen, und beim Speichern der Wärme freigesetzt zu werden.

6. System zur Wärmespeicherung nach einem der Ansprüche 1 bis 5, wobei wenigstens die eine oder wenigstens eine der Kammern (8.1, 8.2, 8.3) in wenigstens zwei in Verbindung stehende Unter-Kammern (18.1, 18.2) derart unterteilt ist, dass das Speichermaterial durch Überlauf von der einen Unter-Kammer in die andere strömt, bevor es durch Überlauf aus der Kammer herausströmt, wobei die Unter-Kammern vorzugsweise durch Wände (14) begrenzt sind, welche Umlenkungen bilden, und die Mittel zur Zirkulation des Wärmeüberträgers vorzugsweise in den Wänden (14) gebildet sind.

7. System zur Wärmespeicherung nach einem der Ansprüche 1 bis 6, wobei die Mittel zur Zirkulation des Wärmeüberträgers in Wänden oder Kammern (8.1, 8.2, 8.3) gebildet sind.

8. System zur Wärmespeicherung nach einem der Ansprüche 1 bis 7, wobei das Fluidisierungsgas und die Gasverbindung vor dem Zirkulieren in der oder den Kammern vermischt werden.

9. System zur Wärmespeicherung nach einem der Ansprüche 1 bis 8 in Kombination mit Anspruch 2 oder 3, wobei die Mittel zur Regulierung der Geschwindigkeit des Eintritts des Fluidisierungsgases allen Kammern gemein sind.

10. System zur Wärmespeicherung nach einem der Ansprüche 1 bis 9, wobei die von dem Wärmeüberträger transportierte thermische Leistung durch das Messen des Durchflusses des Wärmeüberträgers beim Eintritt in das System zur Wärmespeicherung und/oder der Temperatur des Wärmeüberträgers beim Eintritt bestimmt wird.

11. Anordnung zur Wärmespeicherung, umfassend wenigstens zwei Speichersysteme nach einem der Ansprüche 1 bis 10, wobei die Speichersysteme parallel mit den Mitteln zur Versorgung mit Wärmeüberträger verbunden sind, wobei die Anordnung Mittel zum Steuern der Zirkulation des Wärmeüberträgers in dem oder den Speichersystemen umfasst.

12. Speicherinstallation, umfassend wenigstens ein Speichersystem nach einem der Ansprüche 1 bis 10 oder wenigstens eine Anordnung nach Anspruch 11, umfassend eine Zone zum Lagern von Speichermaterial, welches bereit ist, thermische Energie zu speichern, und eine Zone zum Lagern von Speichermaterial, welches bereit ist, thermische Energie abzugeben, und Speichermaterial, wobei das Speichermaterial vorzugsweise mit einem inerten Partickelmaterial vermischt ist, beispielsweise SiC, und das Speichermaterial, welches bereit ist, thermische Energie zu speichern, vorzugsweise $Ca(OH)_2$ ist und das Speichermaterial, welches bereit ist, thermische Energie abzugeben, vorzugsweise CaO ist.

13. Solarkraftwerk, umfassend ein Solarfeld (2), ein Umwandlungssystem (4) von durch das Solarfeld (2) erzeugter thermischer Energie in elektrische Energie und wenigstens eine Installation zur Wärmespeicherung nach Anspruch 12, wobei das Umwandlungssystem (4) und die Speicherinstallation parallel mit dem Solarfeld verbunden sind.

14. Verfahren zur thermochemischen Wärmespeicherung in einem Speichermaterial, umfassend die Schritte:

a1) Befüllen einer oder mehrerer Kammern mit Speichermaterial in einem Zustand, welcher geeignet ist, Wärme zu speichern, wobei die Befüllung vorzugsweise kontinuierlich ist,
b1) Zirkulation eines Fluidisierungsgases in der oder den Kammern,
c1) Zirkulation eines Wärmeüberträgers, welcher geeignet ist, die thermische Leistung in einem Wärmetauscher mit dem Speichermaterial in der oder den Kammern derart zu tauschen, dass eine chemische Reaktion mit dem Speichermaterial stattfindet, so dass das Speichermaterial die Wärme in der oder den Kammern absorbiert,
d1) Messen der zu speichernden thermischen Leistung, welche von dem Wärmeüberträger transportiert wird, vorzugsweise durch Messen des Durchflusses und/oder der Temperatur des Wärmeüberträgers vor seinem Durchqueren der Kammer/n,
e1) Modifizieren der Geschwindigkeit des Eintritts des Fluidisierungsgases als Funktion der Differenz zwischen der gemessenen Leistung und einer Soll-Leistung.

15. Verfahren zum thermochemischen Abgabe von Wärme in einem Speichermaterial, umfassend die Schritte:

a2) Befüllen der Kammer/n mit Speichermaterial in einem Zustand, welcher geeignet ist, die Wärme abzugeben, wobei die Befüllung vorzugsweise kontinuierlich ist,
b2) Zirkulation eines Fluidisierungsgases und einer Gasmischung, welche geeignet ist, eine chemische Reaktion mit dem Speichermaterial sicherzustellen, so dass die Wärme in der oder den Kammern freigesetzt wird,
c2) Zirkulation eines Wärmeüberträgers, welcher geeignet ist, die thermische Leistung in einem Wärmetauscher mit dem Speichermaterial zu übernehmen,
d2) Messen der von dem Wärmeüberträger transportierten thermischen Leistung, vorzugsweise durch Messen des Durchflusses und/oder der Temperatur des Wärmeüberträgers vor seinem Durchqueren der Kammer/n,
e2) Modifizieren der Geschwindigkeit des Eintritts des Fluidisierungsgases als Funktion der Differenz zwischen der gemessenen Leistung und einer Soll-Leistung.

**Claims**

1. Thermochemical heat storage system comprising at least one compartment (8.1) called the upstream compartment, configured to contain a heat storage material (M), means (11) of feeding a heat storage material into the upstream compartment, means (10) of circulating a fluidisation gas in the upstream compartment so as to form a fluidised bed in said upstream compartment (8.1) with the storage material, means (12) of circulating a heat fluid transfer in said upstream compartment (8.1) so as to make heat exchanges with the storage material, the system being **characterised in that** it comprises means (13) of regulating the fluidisation gas inlet velocity as a function of the thermal power transported by the heat transporting fluid at the storage system inlet, such that the temperature of the heat fluid transfer at the outlet from the heat storage system is kept approximately constant.

2. Heat storage system according to claim 1, comprising at least one other compartment (8.3) called the downstream compartment, said upstream compartment (8.1) and downstream compartment (8.3) being arranged such that the material contained in the upstream compartment (8.1) can flow to the downstream compartment (8.3) by overflow when the fluidised bed in the upstream compartment reaches a first given height, means (10) of circulating a fluidisation gas in said downstream compartment (8.3) and means (13) of regulating the inlet velocity of the fluidisation gas into the downstream compartment (8.3) as a function of the thermal power transported by the heat transporting fluid at the inlet to the storage system, the means (12) of circulating the heat fluid transfer passing through the upstream compartment and the downstream compartment.

3. Heat storage system according to claim 2, comprising at least one additional compartment (8.2), means (10) of circulating a fluidisation gas in said additional compartment and means (13) of regulating the inlet velocity of the fluidisation gas as a function of the thermal power transported by the heat transporting fluid at the inlet to the heat storage system, said additional compartment (8.2) being laid out relative to the upstream compartment (8.1) and the downstream compartment (8.3) such that the material contained in the upstream compartment (8.1) flows into the additional compartment (8.2) by overflow when the fluidised bed in the upstream compartment (8.1) reaches the first given height, and the material contained in the additional compartment (8.2) flows to the downstream compartment (8.3) by overflow when the fluidised bed in the additional compartment (8.2) reaches a second given height, the means (12) of circulating the heat fluid transfer passing through the upstream compartment (8.1), the additional compartment (8.2) and the downstream compartment (8.3).

4. Heat storage system according to claim 2 or 3, wherein the circulation means of the heat fluid transfer are such that the heat fluid transfer circulates from the downstream compartment (8.3) towards the upstream compartment (8.1).

5. Heat storage system according to one of claims 1 to 4, comprising means of circulating a gaseous compound in one or all of the compartments, said gaseous compound being intended to react with the storage material to cause the release of heat and being released when heat is put into storage.

6. Heat storage system according to one of claims 1 to 5, wherein at least the compartment or at least one of the compartments (8.1, 8.2, 8.3) is divided into at least two sub-compartments (18.1, 18.2) in communication with each other, such that the storage material flows from one sub-compartment to the next before flowing by overflow outside said compartment, the sub-compartments advantageously being delimited by partitions (14) forming baffles and the heat fluid transfer circulation means are advantageously formed in the partitions (14).

7. Heat storage system according to one of claims 1 to 6, wherein the heat fluid transfer circulation means are formed in the walls of the compartment(s) (8.1, 8.2, 8.3).

8. Heat storage system according to one of claims 1 to 7, wherein the fluidisation gas and the gaseous compound are mixed before being circulated in the compartment(s).

9. Heat storage system according to one of claims 1 to 8 in combination with claim 2 or 3, wherein the means of regulating the inlet velocity of the fluidisation gas are common to all compartments.

10. Heat storage system according to one of claims 1 to 9, wherein the thermal power transported by the heat fluid transfer is determined by measuring the flow of heat fluid transfer at the inlet to the heat storage system and/or the inlet temperature of the heat fluid transfer.

11. Heat storage assembly comprising at least two storage systems according to one of claims 1 to 10, said storage systems being connected in parallel to the heat fluid transfer feeding means, said assembly comprising means of controlling circulation of the heat fluid transfer in the storage system(s).

**12.** Storage installation comprising at least one storage system according to one of claims 1 to 10 or at least one assembly according to claim 11, comprising a zone to place the storage material ready to store thermal energy and a zone to store the storage material ready to supply thermal energy, and the storage material, the storage material advantageously being mixed with inert materialin particle material, for example SiC, and the storage material ready to store thermal energy advantageously being $Ca(OH)_2$ and the storage material ready to supply thermal energy advantageously being CaO.

**13.** Solar power plant comprising a solar field (2), a system (4) for conversion of thermal energy produced by the solar field (2) into electrical energy and at least one heat storage installation according to claim 12, the conversion system (4) and the storage installation being connected in parallel with the solar field.

**14.** Thermochemical method of storing heat in a storage material including the following steps:

a1) Fill one or more compartments with a storage material in a state capable of storing heat, said filling advantageously being continuous,
b1) Circulate a fluidisation gas in the compartment(s),
c1) Circulate a heat fluid transfer capable of releasing thermal power in a heat exchanger with the storage material in the compartment(s), such that a chemical reaction takes place with the storage material such that the storage material absorbs the heat in the compartment(s),
d1) Measure the thermal power to be stored transported by the heat fluid transfer, advantageously by measuring the flow and/or the temperature of the heat fluid transfer before it passes through the compartment(s),
e1) Modify the inlet velocity of the fluidisation gas as a function of the difference between said measured power and a nominal power.

**15.** Thermochemical method of removing heat stored in a storage material including the following steps:

a2) Fill the compartment(s) with a storage material in a state capable of removing heat from storage, said filling advantageously being continuous,
b2) Circulate a fluidisation gas and a gaseous compound capable of triggering a chemical reaction with the storage material so that it releases heat into the compartment(s),
c2) Circulate a heat fluid transfer capable of capturing thermal power in a heat exchanger with the storage material,
d2) Measure the thermal power transported by the heat fluid transfer, advantageously by measuring the flow and/or the temperature of the heat fluid transfer before it passes through the compartment(s),
e2) Modify the inlet velocity of the fluidisation gas as a function of the difference between said measured power and a nominal power.

FIG.1

FIG.2A

FIG.2B

FIG.2C

FIG.3A

FIG.3B

FIG.3C

FIG.4

FIG.5A

FIG.5B

FIG.6A

FIG.6B

FIG.7

FIG.8

EP 2 984 435 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011054676 A2
- US 3973552 A
- US 3955554 A

**Littérature non-brevet citée dans la description**

- **F. SCHAUBE et al.** *J. Solar Energy Eng.,* vol. 133 (3), 2011
- **H. OGURA ; S. ABLIZ ; H. KAGE.** *Fuel Proc. Tech.,* 2004, vol. 85, 8-10